# EUROPEAN PATENT APPLICATION

(11) **EP 3 385 806 A1**
(43) Date of publication of application: **10.10.2018**
(21) Application number: 18163481.7
(22) Date of filing: 22.03.2018
(51) Int. Cl.: G05B 23/02

(54) **CONTROL SYSTEMS AND METHODS FOR CONTROLLING POWER SYSTEMS BASED ON OPERATIONAL RELIABILITIES AND OPERATIONAL ANOMALIES**

(30) Priority: 03.04.2017 US 201715477474
(71) Applicant: General Electric Company, Schenectady, NY 12345 (US)
(72) Inventor: KORSEDAL, John Robert, Greenville, SC 29615 (US); JIANG, Xiaomo, Atlanta, GA 30339 (US)
(74) Representative: Fischer, Michael Maria

(57) **Abstract**

Power systems (10) and methods of controlling power systems (12) are disclosed. The system (10) may include a power plant system (PPS) (12) including a component (36) and at least one computing device (66) in communication with the PPS (12). The computing device(s) (66) may be configured to control the PPS (12) by performing processes including determining if an operational anomaly (124) for the component (36) occurred during operation of the PPS (12). In response to determining that the operational anomaly (124) did not occur, the computing device(s) (66) may also perform processes including determining a first operational reliability (128) of the component (36). In response to determining the operational anomaly (124) occurred, the computing device(s) (66) may also perform processes including determining a second operational reliability (128) of the component (36) based on the determined operational anomaly (124). Additionally, the computing device(s) (66) may perform processes including adjusting operation of the PPS (12) in response to the first operational reliability (128) or the second operational reliability (128) exceeding a predetermined operational reliability threshold.

## Description

### BACKGROUND

The disclosure relates generally to power systems, and more particularly, to optimizing performance of power systems by determining a remaining useful life (RUL) of component(s) of the power system and minimizing operational risks of the power system.

Power systems typically include a variety of different turbomachines and/or systems that are used to generate operational load and/or power output. Two conventional power systems used to generate operational loads include gas turbine systems and combined cycle power plants, which typically include a gas turbine system(s). Conventional combined cycle power plants employ one or multiple gas turbine system(s) operatively coupled to one or multiple steam turbine system(s). The gas turbine system includes a compressor coupled to a gas turbine. The gas turbine is usually coupled to and drives an external component, such as a generator, for producing a load or power output. The steam turbine system includes a high pressure (HP) turbine portion operatively coupled to an intermediate pressure (IP) turbine portion that, in turn, is coupled to a low pressure (LP) turbine. Similar to the gas turbine of the gas turbine system, the HP, IP and LP turbines are employed to drive an external component (e.g., generator). In a typical combined cycle power plant, exhaust gas from the gas turbine is passed to a heat recovery steam generator (HRSG), which may be used to reheat and provide steam to the various turbines of the steam turbine system for enhanced efficiency of the system and/or power plant. Downstream of the HRSG the exhaust gas is released to the atmosphere through a stack.

In order to maintain optimized performance of the conventional power systems, scheduled maintenance and/or part, component or system replacement procedures may be performed on the power systems. That is, prior to operation, scheduled maintenance and/or replacement procedures for parts, components and/or systems of the power systems may be established to maintain optimized performance, load and/or power generation by the power systems. These scheduled maintenance and/or replacement procedures are typically based solely on ideal operating conditions for the parts, components and systems of the power systems. However, actual operation of the power systems, and its parts, component and/or systems, is almost never under ideal operating conditions due to unforeseen and/or uncontrollable conditions, circumstances or parameters (e.g., ambient weather, air quality, fuel quality, part/component material quality and the like). As such, parts, components or systems may require unscheduled maintenance and/or replacement procedures (e.g., before the scheduled procedures) because the power systems may not operate as intended and/or as efficient as desired. However, the only conventional way to detect that parts, components or systems require maintenance and/or replacement before the scheduled procedures is to wait until operational efficiency or output of the power systems begins to decrease. Additionally, because it is difficult to detect unscheduled maintenance or replacement procedures, it is also difficult to determine how much longer parts, components or systems of the power plants have before maintenance or failure of the parts, components or systems occurs.

### SUMMARY

A first aspect of the disclosure provides a system, including: a power plant system including a component; and at least one computing device in communication with the power plant system, the at least one computing device configured to control the power plant system by performing processes including: determining if an operational anomaly for the component occurred during operation of the power plant system; in response to determining the operational anomaly did not occur: determining a first operational reliability of the component based on operational characteristics of at least one of the component, or the power plant system; in response to determining the operational anomaly occurred: determining a second operational reliability of the component based on the determined operational anomaly, and the operational characteristics of at least one of the component, or the power plant system; and adjusting operation of the power plant system in response to one of the first operational reliability or the second operational reliability exceeding a predetermined operational reliability threshold.

A second aspect of the disclosure provides a computer program product including program code, which when executed by at least one computing device, causes the at least one computing device to control a power plant system including a component, by performing processes including: determining if an operational anomaly for the component occurred during operation of the power plant system; in response to determining the operational anomaly did not occur: determining a first operational reliability of the component based on operational characteristics of at least one of the component, or the power plant system; in response to determining the operational anomaly occurred: determining a second operational reliability of the component based on the determined operational anomaly, and the operational characteristics of at least one of the component, or the power plant system; and adjusting operation of the power plant system in response to one of the first operational reliability or the second operational reliability exceeding a predetermined operational reliability threshold.

A third aspect of the disclosure provides a method for controlling a power plant system including a component. The method including: determining if an operational anomaly for the component occurred during operation of the power plant system; in response to determining the operational anomaly did not occur: determining a first operational reliability of the component based on operational characteristics of at least one of the component, or the power plant system; in response to determining the operational anomaly occurred: determining a second operational reliability of the component based on the determined operational anomaly, and the operational characteristics of at least one of the component, or the power plant system; and adjusting operation of the power plant system in response to one of the first operational reliability or the second operational reliability exceeding a predetermined operational reliability threshold.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic depiction of a combined cycle power plant system including a gas turbine system, a steam turbine system and a control system, according to various embodiments.
FIG. 2 shows a flow chart of an example process for controlling operation of a combined cycle power plant using a control system, according to embodiments.
FIG. 3 shows an example operational time v. operational characteristics graph for operation of a component of the power plant system shown in FIG. 1 free of operational anomalies, according to embodiments.
FIG. 4 shows an example operational time v. operational characteristics graph for operation of a component of the power plant system shown in FIG. 1 including operational anomalies, according to embodiments.
FIG. 5 shows a chart including operational reliability information for the component of the power plant system shown in FIG. 1, according to embodiments.
FIG. 6 shows a chart including remaining useful life (RUL) information for the component of the power plant system shown in FIG. 1, according to embodiments.
FIG. 7 shows an environment including a control system for controlling the combined cycle power plant of FIG. 1, according to embodiments.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION

As an initial matter, in order to clearly describe the current disclosure it will become necessary to select certain terminology when referring to and describing relevant machine components within a gas turbine system and/or combined cycle power plants. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbine engine or, for example, the flow of air through the combustor or coolant through one of the turbine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the engine, and "aft" referring to the rearward or turbine end of the engine. It is often required to describe parts that are at differing radial positions with regard to a center axis. The term "radial" refers to movement or position perpendicular to an axis. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. The term "axial" refers to movement or position parallel to an axis. Finally, the term "circumferential" refers to movement or position around an axis. It will be appreciated that such terms may be applied in relation to the center axis of the turbine.

As indicated above, the disclosure relates generally to power plants, and more particularly, to optimizing performance of the power system by determining a remaining useful life (RUL) of component(s) of the power system and minimizing operational risks of the power system.

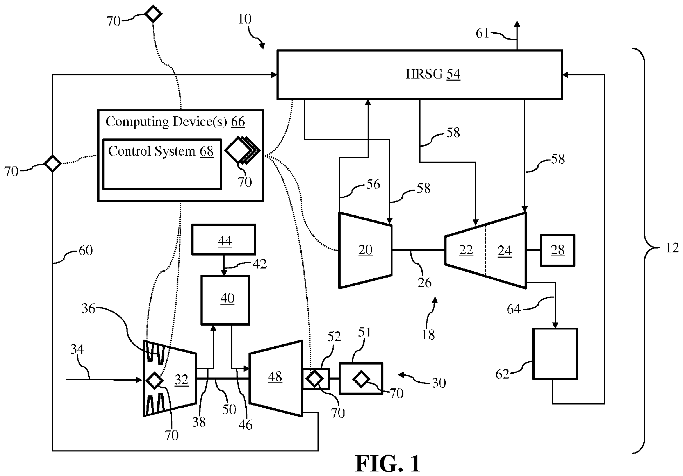

These and other embodiments are discussed below with reference to FIGs. 1-7. However, those skilled in the art will readily appreciate that the detailed description given herein with respect to these Figures is for explanatory purposes only and should not be construed as limiting.

FIG. 1 shows a schematic depiction of a system 10 according to various embodiments of the disclosure. As shown, system 10 can include a combined cycle power plant system 12 (hereafter, "power plant system 12") including a steam turbine (ST) system 18, which in the depiction shown, can include a high pressure (HP) portion 20, an intermediate pressure (IP) portion 22 and a low pressure (LP) portion 24, as is known in the art. HP portion 20, IP portion 22 and LP portion 24 of ST system 18 may all be coupled and/or positioned on and/or may be configured to rotate a shaft 26 to produce mechanical work and/or to drive an additional component of ST system 18. As shown in FIG. 1, shaft 26 of ST system 18 may be coupled to and/or may drive an external component, and more specifically, a generator 28 configured to generate power and/or produce a load.

Power plant system 12 can further include a gas turbine (GT) system 30. GT system 30 may include a compressor 32. Compressor 32 compresses an incoming flow of fluid 34 (e.g., air) as it flows through compressor 32. GT system 30 may also include stator vanes 36 positioned within compressor 32. Stator vanes 36 positioned within compressor 32 may be configured to be aid in moving and/or passing fluid 34 through compressor 32. Although compressor 32 is shown to include two stages of adjustable stator vanes 36, it is understood that the number of adjustable stator vane stages in compressor 32 may be merely illustrative. As such, compressor 32 may include more or less stages of adjustable stator vanes 36 that may be configured to regulate mass flow of fluid 34, as discussed herein.

Compressor 32 delivers a flow of compressed fluid 38 (e.g., compressed air) to a combustor 40. Combustor 40 mixes the flow of compressed fluid 38 with a pressurized flow of fuel 42 provided by a fuel supply 44 and ignites the mixture to create a flow of combustion gas 46. The flow of combustion gas 46 is in turn delivered to a turbine component 48, which typically includes a plurality of turbine blades (not shown). The flow of combustion gas 46 drives turbine component 48 to produce mechanical work. The mechanical work produced in turbine component 48 drives compressor 32 via a shaft 50, and may be used to drive a generator 51 (e.g., external component) configured to generate power and/or produce a load. Rotating shaft 50 may substantially pass through a rotor bearing 52 (hereafter, "bearing 52") positioned within a bearing housing (not shown), adjacent turbine component 48. Bearing 52 may be configured to receive and/or support shaft 50 and allow and/or aid in the rotation of shaft 50 during operation of GT system 30, as discussed herein.

Although power plant system 12 is shown in FIG. 1 to include a dual-shaft configuration, where two separate generators 28, 51 are utilized, it is understood that in other non-limiting examples, ST system 18 and GT system 30 may share a single shaft and in turn, may share a single generator. Additionally, although power plant system 12 is shown to only include a single ST system 18 and single GT system 30, it is understood that power plant system 12 may include a plurality of ST systems 18 and/or GT system(s) 30 that may be configured to generate an operational load and/or power output.

Power plant system 12 can further include a heat recovery steam generator (HRSG) 54 fluidly connected with the ST system 18 (e.g., with HP portion 20, IP portion 22 and/or LP portion 24) and GT system 30. As shown in the non-limiting example of FIG. 1, HRSG 54 may be fluidly connected and/or coupled with ST system 18 via exhaust conduit(s) 56 to receive exhaust fluid (e.g., steam) from ST system 18, as well as, provide steam to the portions of ST system 18 via supply conduits 58. Additionally in the non-limiting example, HRSG 54 may be fluidly connected and/or coupled with GT system 30 via an exhaust channel 60 coupled to and/or in fluid communication with turbine component 48. Exhaust channel 60 may provide exhaust fluid (e.g., gas) from GT system 30 to HRSG 54 to be utilized in generating and/or heating steam for ST system 18. A stack 61 of HRSG 54 may exhaust or release (excess or used) gas and/or fluid from HRSG 54 into the atmosphere and/or out of power plant system 12

Power plant system 12 can further include a condenser 62. Condenser 62 may be in fluid communication and/or may be fluidly coupled with various components of power plant system 12. In a non-limiting example, condenser 62 may be fluidly connected and/or coupled to LP portion 24 of ST system 18 via steam exhaust duct 64. Condenser 62 may be configured to condense exhaust flow and/or bypass flow (not shown) from ST system 18 and/or HRSG 54 (not shown), and providing condensed fluid (e.g., condensate water) to HRSG 54, as is known in the art.

As shown in FIG. 1, system 10 can include at least one computing device 66 configured to control power plant system 12. Computing device(s) 66 can be hard-wired and/or wirelessly connected to and/or in communication with power plant system 12, and its various components (e.g., ST system 18, GT system 30, HRSG 54 and so on) via any suitable electronic and/or mechanic communication component or technique. Computing device(s) 66, and its various components discussed herein, may be a single stand-alone system that functions separate from another power plant control system (e.g., computing device)(not shown) that may control and/or adjust operations and/or functions of power plant system 12, and its various components (e.g., ST system 18, GT system 30 and so on). Alternatively, computing device(s) 66 and its components may be integrally formed within, in communication with and/or formed as a part of a larger power plant control system (e.g., computing device) (not shown) that may control and/or adjust operations and/or functions of power plant system 12, and its various components (e.g., ST system 18, GT system 30 and so on).

In various embodiments, computing device(s) 66 can include a control system 68 and a plurality of sensors 70 for controlling operations of power plant system 12. As discussed herein control system 68 can control power plant system 12, and its various components, to optimize performance of power plant system 12 by determining a remaining useful life (RUL) of component(s) (e.g., stator vanes 36, bearing 52, and so on) of power plant system 12 and minimizing operational risks of power plant system 12.

As shown in FIG. 1, computing device(s) 66 may include and/or may be in electrical and/or mechanical communication with a plurality of sensors 70 positioned throughout, within, adjacent to and/or around system 10 to detect operational characteristic(s) of components (e.g., compressor 32, stator vanes 36, bearing 52, and so on) of power plant system 12, as discussed herein. Although a portion of the plurality of sensors 70 (e.g., sensor 70 within and/or in communication with generator 51) are not depicted to be in communication with computing device(s) 66, it is understood that all sensors 70 of system 10 are in communication with and/or are capable of providing detected-data (e.g., operational characteristics) relating to power plant system 12 to computing device(s) 66, as discussed herein. As shown in the non-limiting example of FIG. 1, sensor 70 of and/or connected to computing device(s) 66 may be positioned within compressor 32. Additionally, or alternatively, at least one distinct/additional sensor 70 may be positioned in distinct portions of GT system 30. For example, sensor(s) 70 may be positioned within and/or adjacent generator 51, bearing 52, and/or exhaust channel 60. Although shown as being positioned within and/or in connection with GT system 30, it is understood that sensor(s) 70 of computing device(s) 66 may be positioned throughout system 10 and/or power plant system 12 to detect operational characteristic(s) of components of power plant system 12, as discussed herein. For example, sensor(s) 70 may be positioned within various portions of ST system 18 (e.g., HP portion 20, IP portion 22 and/or LP portion 24), HRSG 54, condenser 62 and so on. Additionally as shown in FIG. 1, sensor(s) 70 may be positioned adjacent to, outside of and/or away from power plant system 12. Although positioned adjacent to and/or outside of power plant system 12, sensor(s) 70 may be connected to, in communication with and/or included within computing device(s) 66, as discussed herein.

Sensor(s) 70 in communication with computing device(s) 66 of system 10 may be any suitable sensor or device configured to detect and/or determine data, information and/or characteristics relating to power plant system 12 during operation. For example, sensor(s) 70 positioned within and/or coupled to components of power plant system 12 may be any suitable sensor configured to detect and/or determine operational characteristics, or physical state variables/quantities of the component(s) (e.g., HP portion 20, compressor 32, stator vanes 36, bearing 52, HRSG 54, and so on) of power plant system 12. The operational characteristic(s) of the component(s) of power plant system 12 that may be detected and/or determined by sensor(s) 70 may include, but are not limited to, component-ambient temperature, component temperature, fluid temperature, fluid pressure, fluid density, fluid speed, component rotational speed, component displacement/vibration, noise and/or generated operational load on generator 51.

In another non-limiting example, sensor(s) 70 positioned adjacent to and/or outside of power plant system 12 may be any suitable sensor configured to detect and/or determine ambient conditions for power plant system 12. The ambient condition(s) for power plant system 12 that may be detected and/or determined by sensor(s) 70 may include data, information and/or characteristics relating to weather, climate, and/or conditions of the geography, area and/or space surrounding power plant system 12. For example, the ambient conditions may include, but are not limited to, ambient air temperature, ambient humidity conditions, past/present/future ambient weather conditions, air quality (e.g., detectable air impurities (ppm)), ambient air debris (e.g., sand), ambient atmospheric pressure, altitude, ambient wind speed, and the like.

Although five sensors 70 are shown, it is understood that in another non-limiting example, system 10 may include only one sensor 70, so long as sensor 70 may be configured to provide computing device(s) 66, and specifically control system 68, with information or data relating to operational characteristics, and/or ambient conditions, as discussed herein. The number of sensors 70 shown in FIG. 1 is merely illustrative and non-limiting. As such, system 10 may include more or less sensors 70 than what is depicted in the Figures.

Sensors 70 may be configured to provide computing device(s) 66, and specifically control system 68, with information or data relating to operational characteristics, and/or physical state variables/quantities of component(s) of power plant system 12, and ambient conditions for power plant system 12, to determine operational reliability or reliabilities for the component. That is, and as discussed herein, computing device(s) 66 and/or control system 68 may calculate operational reliability or reliabilities for the component using the data relating to the operational characteristics for the component(s) obtained by sensor(s) 70 and the ambient conditions for power plant system 12 as detected by sensor(s) 70. Additionally, and as discussed herein, data relating to operational characteristics of the component(s) during operation of power plant system 12 and ambient conditions for power plant system 12 may be utilized to determine and/or calculate remaining useful life (RUL) information for the component(s). The calculated operational reliability and/or RUL information for the component(s) of power plant system 12 may be utilized to improve/optimize operation or performance of power plant system 12 and/or to minimize operational risks (e.g., component required maintenance or failure) of power plant system 12.

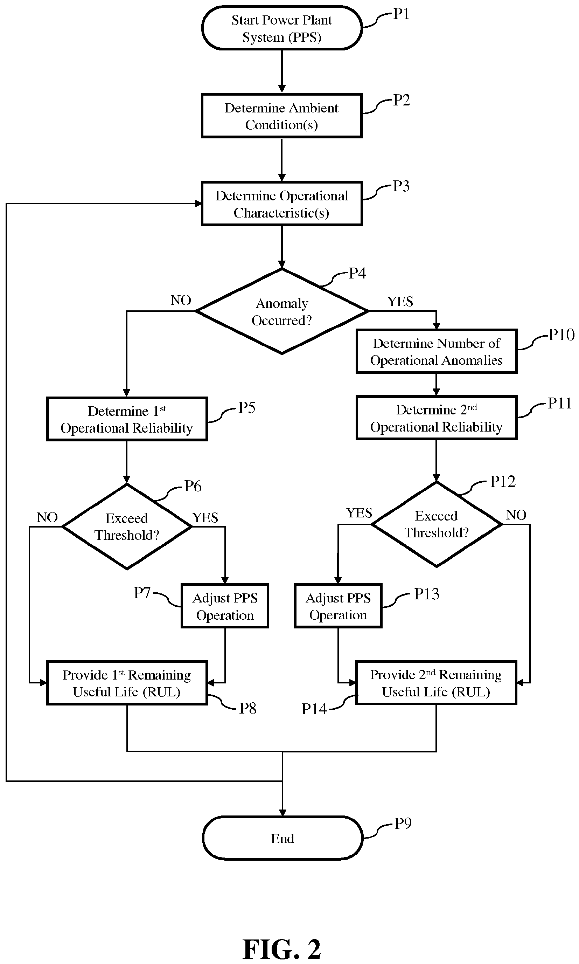

FIG. 2 shows a flow diagram illustrating non-limiting example processes of controlling power plant system 12. These processes can be performed, e.g., by at least one computing device 66 including control system 68 (*see*, FIG. 1), as described herein. In other cases, these processes can be performed according to a computer-implemented method of controlling power plant system 12. In still other embodiments, these processes can be performed by executing computer program code on computing device(s) 66, causing computing device(s) 66, and specifically control system 68, to control operation of power plant system 12. With continued reference to FIG. 1, the processes shown in the flow diagram of FIG. 2 are discussed in detail below.

In process P1, power plant system 12 may begin operation and/or may be started. Specifically, the various segments, sections, components and/or systems, such as ST system 18, GT system 30, HRSG 54 and so on, may begin operation to drive generator 51 and produce a load and/or power output. Power plant system 12 and its various, distinct systems and/or components, may have been previously shut down or stopped operating and required to be started, begin and/or resume operation to drive generator 51 to produce the operational load, as discussed herein. Power plant system 12, and its various, distinct systems and/or components, may be shut down or stopped operating for various purposes or reasons. In non-limiting examples, power plant system 12, and its various, distinct systems and/or components, may be shut down to perform a scheduled maintenance procedure on a component(s) or a scheduled component(s) replacement. In another non-limiting example, power plant system 12, and its various, distinct systems and/or components, may be shut down after detecting a component outage event that may negatively affect the operation of power plant system 12 and/or cause or caused damage to power plant system 12. In other non-limiting examples, power plant system 12, and its various, distinct systems and/or components, may be shut down to perform an unscheduled maintenance procedure on a component(s) or an unscheduled component(s) replacement.

In process P2, ambient condition(s) for power plant system 12 may be determined. Specifically, various ambient condition(s) for power plant system 12 may be detected, determined, obtained, calculated and/or identified using a variety of devices and/or techniques. In a non-limiting example, the ambient condition(s) for power plant system 12 may be known, predetermined and/or calculated based on known data, information and/or characteristics relating to weather, climate, and/or conditions of the geography, area and/or space surrounding power plant system 12. In other non-limiting examples, the ambient condition(s) for power plant system 12 may be determined and/or calculated based on real-time, information and/or data relating to weather, climate, and/or conditions of the geography, area and/or space surrounding power plant system 12 during operation. Where power plant system 12 includes computing device(s) 66 (*see*, FIG. 1), sensor(s) 70 may detect and/or obtain real-time information relating to weather, climate, and/or conditions of the geography, area and/or space surrounding power plant system 12. As a result, ambient condition(s) may be determined and/or calculated based on the real-time information detected by sensor(s) 70.

In process P3, operational characteristic(s) for component(s) of power plant system 12 may be determined. Specifically, various operational characteristic(s) and/or physical state variables/quantities of component(s) of power plant system 12 may be detected, determined, obtained, calculated and/or identified using a variety of devices and/or techniques. The operational characteristic(s) for component(s) of power plant system 12 may be known, predetermined and/or calculated based on known information and/or standards of the component(s) and/or power plant system 12. For example, the operational characteristic(s) for component(s) of power plant system 12 may be predetermined and/or calculated based on known, ideal and/or calculated operational attributes and/or material properties of the component(s) and/or power plant system 12. In other non-limiting examples, the operational characteristic(s) for component(s) of power plant system 12 may be determined and/or calculated based on real-time, operational information for the component(s) and/or power plant system 12 during operation. Where power plant system 12 includes computing device(s) 66 (*see*, FIG. 1), sensor(s) 70 may detect and/or obtain real-time operational information relating to the component(s) and/or power plant system 12 during operation. As a result, operational characteristic(s) may be determined and/or calculated based on the real-time information detected by sensor(s) 70.

In process P4, it is determined if an operational anomaly for the component(s) occurred during operation of power plant system 12. In a non-limiting example, computing device(s) 66 configured to control power plant system 12 may be configured to determine if an operational anomaly or anomalies for the component(s) occurred during operation of power plant system 12. The operational anomaly or anomalies may be determined using the operational characteristic(s) determined in process P3. Specifically, once the operational characteristic(s) for the component(s) are determined, the operational anomaly or anomalies may be determined by comparing the determined operational characteristic(s) with operational characteristic(s) thresholds for the component(s) during operation of power plant system 12, and detecting when the determined operational characteristic(s) vary (e.g., exceed, fall below) from the operation characteristic(s) thresholds. Instances where the determined operational characteristic(s) vary from the operation characteristic(s) thresholds correlate to and/or indicate that the operational anomaly or anomalies for the component occurred during operation of power plant system 12. The operational characteristic(s) thresholds for the component(s) of power plant system 12 may be predetermined based on determined operational characteristics (*see*, process P3), operational attributes and/or material properties of the component(s) and/or power plant system 12. In non-limiting examples, operational characteristic(s) thresholds for the component(s) may be operational parameters or ranges that may optimize operation of the component(s) and/or power plant system 12 and/or may minimize operational risks (e.g., required maintenance or failure) of the component(s) and/or power plant system 12.

If no operational anomaly or anomalies are detected for component(s) during operation of power plant system 12, then a first operational reliability is determined. That is, in process P5 a first operational reliability of the component(s) of power plant system 12 is determined. The first operational reliability of the component(s) of power plant system 12 may be based on the ambient condition(s) for power plant system 12. Specifically, the first operational reliability of the component(s) of power plant system 12 may be determined, and/or based on the ambient condition(s) for power plant system 12, as determined in process P2 (e.g., known, calculated, detected via sensor(s) 70 and so on). Additionally, the first operational reliability of the component(s) of power plant system 12 may be based on the operational characteristic(s) of the component(s) and/or power plant system 12. That is in addition to the ambient condition(s), the first operational reliability of the component(s) of power plant system 12 may be determined, and/or based on the operational characteristic(s) of the component(s) and/or power plant system 12, as determined in process P3 (e.g., known, calculated, detected via sensor(s) 70 and so on). Determining the first operational reliability of the component(s) may include calculating a variety of probabilities relating to required maintenance and/or failure of the component(s) of power plant system 12. In non-limiting examples, determining the first operational reliability of the component(s) may include calculating a probability of requiring maintenance on the component(s) in real-time (e.g., immediately), calculating a probability of failure for the component(s) in real-time, calculating a probability of requiring maintenance on the component(s) at a predetermined, future time, and/or calculating a probability of failure for the component(s) at a predetermined, future time. The calculated variety of probabilities may be estimates, a single percentage, a percentage range and/or any other suitable calculated result that may provide a probability relating to required maintenance and/or failure of the component(s) of power plant system 12. As discussed herein, an operator of power plant system 12 may be provided with the determined first operational reliability for the component(s) and may determine that a future maintenance procedure and/or a replacement procedure for the component(s) of power plant system 12 may be necessary or required. The determined future maintenance and/or replacement procedures for the component(s) may help to maintain optimized performance of power plant system 12 and/or to avoid operational risk, such as undesirable damage to the component(s) and/or power plant system 12, and/or minimize a reduction in efficiency and/or power generation by power plant system 12.

In process P6, it is determined if the first operational reliability of the component(s) exceeds a predetermined operational reliability or risk threshold. Specifically, the first operational reliability of the component(s) determined in process P5 may be compared to a predetermined operational reliability threshold of the component(s) of power plant system 12. Similar to the first operational reliability of the component(s) of power plant system 12, the predetermined operational reliability threshold for the component(s) may be based on the ambient condition(s) for power plant system 12 and/or operational characteristic(s) of the component(s) and/or power plant system 12. Specifically, the predetermined operational reliability threshold for the component(s) of power plant system 12 may be predetermined and/or based on ambient condition(s) that are known, determined, ideal, and/or calculated using weather, climate, and/or conditions of the geography, area and/or space surrounding power plant system 12. Additionally, the predetermined operational reliability threshold for the component(s) of power plant system 12 may be predetermined and/or based on operational characteristic(s) that are known, ideal and/or calculated using operational attributes and/or material properties of the component(s) and/or power plant system 12. Additionally, the predetermined operational reliability threshold for the component(s) of power plant system 12 may not be predetermined and/or may be based on actual and/or real-time ambient condition(s) for power plant system 12 and/or operational characteristic(s) of the component(s) and/or power plant system 12 that may be detected by sensor(s) 70.

Also similar to the first operational reliability of the component(s) of power plant system 12, the predetermined operational reliability threshold for the component(s) may include a variety of calculated and/or determined probabilities relating to required maintenance and/or failure of the component(s) of power plant system 12. Specifically, the predetermined operational reliability threshold for the component(s) may represent and/or define an upper limit for various probabilities relating to required maintenance and/or failure of the component(s) of power plant system 12. The upper limits may indicate when the operation of power plant system 12 should be adjusted (e.g., slowed or shut down) to avoid undesirable damage to the component(s) and/or power plant system 12, and/or reduction in efficiency and/or power generation by power plant system 12, as discussed herein (*see*, process P7). In non-limiting examples, the predetermined operational reliability threshold for the component(s) may include a probability of requiring maintenance on the component(s) in real-time (e.g., immediately), a probability of failure for the component(s) in real-time, a probability of requiring maintenance on the component(s) at a predetermined, future time, and/or a probability of failure for the component(s) at a predetermined, future time.

If it is determined that the first operational reliability exceeds the predetermined operational reliability threshold, then the operation of power plant system 12 may be adjusted. That is, in process P7 the operation of power plant system 12 may be adjusted in response to determining that the first operational reliability exceeds the predetermined operational reliability threshold. The operation of power plant system 12 may be adjusted in response to the first operational reliability exceeding the predetermined operational reliability threshold to avoid undesirable damage to the component(s) and/or power plant system 12, and/or minimize a reduction in efficiency and/or power generation by power plant system 12. Adjusting the operation of power plant system 12 may include, for example, reducing a power output generated by power plant system 12, and/or stopping operation of or shutting down power plant system 12 or a distinct system (e.g., ST system 18, GT system 30) of power plant system 12. In the non-limiting example, reducing the power output generated by power plant system 12 may be achieved in any suitable manner or operational fashion including, but not limited to, reducing the load or output generated by ST system 18 and/or GT system 30, reducing the firing temperature of GT system 30, reducing the air pressure of the fluid flowing through ST system 18 from HRSG, reducing fuel input in GT system 30 and the like. Adjusting the operation of power plant system 12 may provide the opportunity to repair, perform maintenance on and/or replace component(s) of power plant system 12, as discussed herein.

Subsequent to adjusting the operation of power plant system 12 in process P7, or alternatively, subsequent to determining that the first operational reliability of the component(s) does not exceed the predetermined operational reliability threshold in process P6, first remaining useful life (RUL) information for the component(s) may be provided. That is in process P8, first RUL information for the component(s) of power plant system 12 may be provided. The first RUL information for the component(s) may be based on the first operational reliability determined in process P5. Specifically, the first RUL information for the component(s) may be based on, identified and/or provided using the determined first operational reliability, or the variety of calculated probabilities relating to required maintenance and/or failure of the component(s) of power plant system 12. In non-limiting examples, the first RUL information may include operational hours for the component(s) prior to requiring maintenance of the component(s), a number of start-ups for the component(s) prior to requiring maintenance of the component(s), operational hours for the component(s) prior to the failure of the component(s), and/or a number of start-ups for the component(s) prior to the failure of the component(s). The first RUL information may be estimates, a single number or hour value, a number or hour range and/or any other suitable provided results that may aid in optimizing performance of power plant system 12 and/or minimizing operational risks of power plant system 12. That is, and as discussed herein, an operator of power plant system 12 may be provided with the first RUL information for the component(s) and may schedule a future maintenance procedure and/or a replacement procedure for the component(s) of power plant system 12. The scheduled future maintenance and/or replacement procedures for the component(s) may help to maintain optimized performance of power plant system 12 and/or to avoid operational risk, such as undesirable damage to the component(s) and/or power plant system 12, and/or minimize a reduction in efficiency and/or power generation by power plant system 12.

In process P9, the process of controlling power plant system 12, as discussed herein may end. Additionally, at process P9 power plant system 12 may be shut down and/or may stop operating. Power plant system 12 may be shut down as a result of, for example, a scheduled maintenance procedure and/or a scheduled replacement procedure for the component(s) of power plant system 12. The scheduled maintenance procedure and/or scheduled replacement procedure for the component(s) may be planned and/or arranged based on the first operational reliability determined in process P5 and/or the first RUL information provided in process P8, as discussed herein. The first operational reliability in process P5 is used to calculate probability of failure using various or multiple analytics or survival methods such as, for example, Weibull or Neural Network and based on, for example, operational hours for the component(s), a number of start-ups for the component(s), and the like. Alternatively, after process P8, the process for controlling power plant system 12 may begin again and/or reset, and process P3, and any subsequent processes, may be performed again.

Returning to process P4, if it is determined that an operational anomaly or anomalies for the component(s) did occur, the processes P10-P14 may be performed. Specifically, in response to determining that an operational anomaly or anomalies for the component(s) occurred, the number of operational anomalies for the component(s) that occurred during the operation of power plant system 12 may then be determined in process P10. The number of operational anomalies for the component(s) may be determined by detecting and/or counting the number of instances when the determined operational characteristic(s) vary (e.g., exceed, fall below) from the operation characteristic(s) thresholds during operation of power plant system 12. In addition to determining a number of operational anomalies for the component(s), an operational anomaly rate may be calculated for component(s) during operation of power plant system 12. That is, using the determined number of operational anomalies for the component(s), and determining a change in time between the determined and/or detected anomalies from the determined operational characteristics (process P3), an operational anomaly rate for the component(s) of power plant system 12 may be calculated. The determined number of operational anomalies and/or the calculated operational anomaly rate for the component(s) may be utilized to determine a second operational reliability for the component(s) (*see*, process P11) and/or to provide a second remaining useful life (RUL) for component(s) (*see*, process P14). For example, as the number of operational anomalies for the component(s) increases, the variety of probabilities relating to required maintenance and/or failure of the component(s) of power plant system 12 (e.g., second operational reliability) may also increase by some degree. In another non-limiting example, the calculated operational anomaly rate for the component(s) may be assumed as an operational pattern or consistency (e.g., the calculated operational anomaly rate for the component(s) may continue over the life of operation). In turn, the calculated operational anomaly rate may be utilized in forecasting and/or for determining future operational information for the component(s) during operation of power plant system 12.

In process P11, a second operational reliability of the component(s) of power plant system 12 may be determined. Similar to the first operational reliability of the component(s) of power plant system 12, the second operational reliability of component(s) determined in process P11 may be based on the ambient condition(s) for power plant system 12. Specifically, the second operational reliability of the component(s) of power plant system 12 may be determined, and/or based on the ambient condition(s) for power plant system 12, as determined in process P2 (e.g., known, calculated, detected via sensor(s) 70 and so on). Additionally, the second operational reliability of component(s) may be based on the operational characteristic(s) of the component(s) and/or power plant system 12. That is, the second operational reliability of the component(s) of power plant system 12 may be determined, and/or based on the operational characteristic(s) of the component(s) and/or power plant system 12, as determined in process P3 (e.g., known, calculated, detected via sensor(s) 70 and so on). Additionally, or alternatively, the second operational reliability of the component(s) of power plant system 12 may be determined, and/or based on the number and/or severity of the operational anomaly or anomalies of the component(s), as determined in process P4, and the determined number of operational anomalies and/or calculated operational anomaly rate, as determined in process P10. Also similar to the first operational reliability, determining the second operational reliability of the component(s) may include calculating a variety of probabilities relating to required maintenance and/or failure of the component(s) of power plant system 12 using a variety of analytic methods such as, for example, Weibull or Artificial Neural Network. In non-limiting examples, determining the second operational reliability of the component(s) may include calculating a probability of requiring maintenance on the component(s) in real-time (e.g., immediately), calculating a probability of failure for the component(s) in real-time, calculating a probability of requiring maintenance on the component(s) at a predetermined, future time, and/or calculating a probability of failure for the component(s) at a predetermined, future time. The calculated variety of probabilities may be estimates, a single percentage, a percentage range and/or any other suitable calculated result that may provide a probability relating to required maintenance and/or failure of the component(s) of power plant system 12. As discussed herein, an operator of power plant system 12 may be provided with the determined second operational reliability for the component(s) and may determine that a future maintenance procedure and/or a replacement procedure for the component(s) of power plant system 12 may be necessary or required. The determined future maintenance and/or replacement procedures for the component(s) may help to maintain optimized performance of power plant system 12 and/or to avoid operational risk, such as undesirable damage to the component(s) and/or power plant system 12, and/or minimize a reduction in efficiency and/or power generation by power plant system 12.

Process P12-P14 may be substantially similar to processes P6-P8, as discussed herein. Specifically, in process P12, it is determined if the second operational reliability of the component(s) exceeds a predetermined operational reliability threshold. The second operational reliability of the component(s) determined in process P11 may be compared to a predetermined operational reliability threshold of the component(s) of power plant system 12. Similar to the first and second operational reliability of the component(s) of power plant system 12, the predetermined operational reliability threshold for the component(s) may be based on the ambient condition(s) for power plant system 12 and/or operational characteristic(s) of the component(s) and/or power plant system 12. Specifically, the predetermined operational reliability threshold for the component(s) of power plant system 12 may be predetermined and/or based on ambient condition(s) that are known, determined, ideal, and/or calculated using weather, climate, and/or conditions of the geography, area and/or space surrounding power plant system 12. Additionally, the predetermined operational reliability threshold for the component(s) of power plant system 12 may be predetermined and/or based on operational characteristic(s) that are known, ideal and/or calculated using operational attributes and/or material properties of the component(s) and/or power plant system 12. Additionally, the predetermined operational reliability threshold for the component(s) of power plant system 12 may not be predetermined and/or may be based on actual and/or real-time ambient condition(s) and/or operational characteristic(s) of the component(s) and/or power plant system 12 that may be detected by sensor(s) 70. Also similar to the first and second operational reliability of the component(s) of power plant system 12, the predetermined operational reliability threshold for the component(s) may include a variety of calculated and/or determined probabilities relating to required maintenance and/or failure of the component(s) of power plant system 12, as discussed herein with respect to process P6. In non-limiting examples, the predetermined operational reliability threshold utilized in process P12 may be identical to, or substantially distinct from, the predetermined operational reliability threshold utilized in process P6, as discussed herein.

If it is determined that the second operational reliability or risk exceeds the predetermined operational reliability threshold, then the operation of power plant system 12 may be adjusted. That is, in process P13 the operation of power plant system 12 may be adjusted in response to determining that the second operational reliability exceeds the predetermined operational reliability threshold. Similar to process P7, the operation of power plant system 12 may be adjusted in response to the second operational reliability exceeding the predetermined operational reliability threshold to avoid undesirable damage to the component(s) and/or power plant system 12, and/or minimize a reduction in efficiency and/or power generation by power plant system 12. Adjusting the operation of power plant system 12 may include, for example, reducing a power output generated by power plant system 12, and/or stopping operation of or shutting down power plant system 12 or a distinct system (e.g., ST system 18, GT system 30) of power plant system 12. In the non-limiting example, reducing the power output generated by power plant system 12 may be achieved in any suitable manner or operational fashion including, but not limited to, reducing the load or output generated by ST system 18 and/or GT system 30, reducing the firing temperature of GT system 30, reducing the air pressure of the fluid flowing through ST system 18 from HRSG, reducing fuel input in GT system 30 and the like. Adjusting the operation of power plant system 12 may provide the opportunity to repair, perform maintenance on and/or replace component(s) of power plant system 12, as discussed herein.

Subsequent to adjusting the operation of power plant system 12 in process P13, or alternatively, subsequent to determining that the second operational reliability of the component(s) does not exceed the predetermined operational reliability threshold in process P12, second remaining useful life (RUL) information for the component(s) may be provided. That is in process P14, second RUL information for the component(s) of power plant system 12 may be provided. The second RUL information for the component(s) may be based on the second operational reliability determined in process P11. Specifically, the second RUL information for the component(s) may be based on, identified and/or provided using the determined second operational reliability, or the variety of calculated probabilities relating to required maintenance and/or failure of the component(s) of power plant system 12. In non-limiting examples, and similar to the first RUL information, the second RUL information may include operational hours for the component(s) prior to requiring maintenance of the component(s), a number of start-ups for the component(s) prior to requiring maintenance of the component(s), operational hours for the component(s) prior to the failure of the component(s), and/or a number of start-ups for the component(s) prior to the failure of the component(s). The second RUL information may be estimates, a single number or hour value, a number or hour range and/or any other suitable provided results that may aid in optimizing performance of power plant system 12 and/or minimizing operational risks of power plant system 12. That is, and as discussed herein, an operator of power plant system 12 may be provided with the second RUL information for the component(s) and may schedule a future maintenance procedure and/or a replacement procedure for the component(s) of power plant system 12. The scheduled future maintenance and/or replacement procedures for the component(s) may help to maintain optimized performance of power plant system 12 and/or to avoid operational risk, such as undesirable damage to the component(s) and/or power plant system 12, and/or minimize a reduction in efficiency and/or power generation by power plant system 12.

After process P14 is performed, the process of controlling power plant system 12 may end, as discussed herein with respect to process P9. Additionally, at process P9 power plant system 12 may be shut down and/or may stop operating. Power plant system 12 may be shut down as a result of, for example, a scheduled maintenance procedure and/or a scheduled replacement procedure for the component(s) of power plant system 12. The scheduled maintenance procedure and/or scheduled replacement procedure for the component(s) may be planned and/or arranged based on the second operational reliability determined in process P11 and/or the second RUL information provided in process P14, as discussed herein. Alternatively, after process P14, the process for controlling power plant system 12 may begin again and/or reset, and process P3, and any subsequent processes, may be performed again.

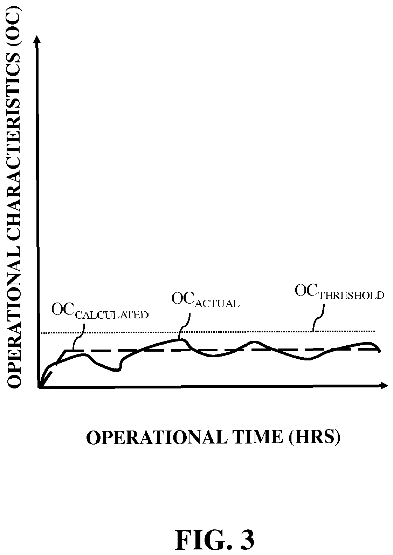

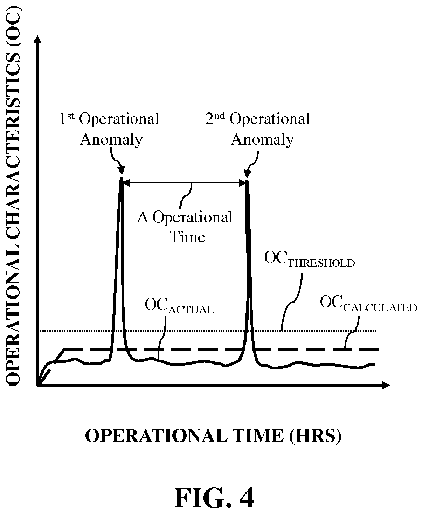

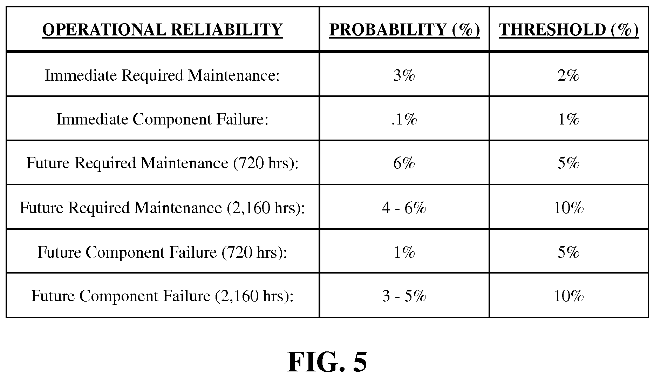

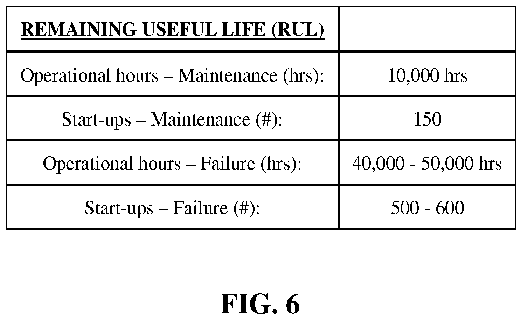

FIGs. 3-6 show various outputs relating to the operation of component(s) of power plant system 12, operational reliability, and remaining useful life (RUL) for component(s) to optimize operation of power plant system 12 and/or to minimize operational risks of power plant system 12, as discussed herein. FIGs. 3 and 4 depicts example operational time (hrs) v. operational characteristic(s) graph for operation of a component(s) of power plant system 12 (*see*, FIG. 1) free of operational anomalies (*see*, FIG. 3) and including operational anomalies (*see*, FIG. 4), respectively. Additionally, FIG. 5 shows a chart including operational reliability information for component(s) of power plant system 12, and FIG. 6 shows a chart including remaining useful life (RUL) information for component(s) of power plant system 12. With continued reference to FIGs. 1 and 2, the process of controlling power plant system 12 using control system 68 of computing device(s) 66 (*see*, FIG. 1) may now be discussed herein with respect to FIGs. 3-6.

FIGs. 3 and 4 show example operational time (hrs) v. operational characteristic(s) graphs for operation of a component(s) of power plant system 12 (*see*, FIG. 1). In a non-limiting example, the component of power plant system 12 may be bearing 52 of GT system 30 (*see*, FIG. 1). As such, the operational characteristics shown in the graphs shown in FIGs. 3 and 4 may be related to bearing 52 and its operation within power plant system 12. For example, and as discussed herein, the operational characteristics for bearing 52, as shown in FIGs. 3 and 4, may relate to bearing temperature during operation of power plant system 12. However, it is understood that the operational characteristics may include a variety of other operational characteristics for bearing 52 during operation of power plant system 12 including, but not limited to, bearing vibration, bearing noise, bearing speed, bearing displacement and the like. Component of power plant system 12 being discussed herein as bearing 52 of GT system 30 is merely illustrative. As such, it is understood that component(s) of power plant system 12 may be any part, component and/or system included within power plant system 12. Additionally, the non-limiting examples of operational characteristics of component(s) (e.g., bearing 52) are also illustrative and are not an exhaustive list of operational characteristics that may be utilized for controlling power plant system 12, as discussed herein.

As shown in FIGs. 3 and 4, the example operational time (hrs) v. operational characteristic(s) graphs for bearing 52 of power plant system 12 may include a plurality of distinct, plot points and/or determined operational characteristic values for bearing 52 during operation. Specifically as shown in FIG.s 3 and 4, the graphs may include calculated operational characteristic values (OC_{CALCULATED}), actual operational characteristic values (OC_{ACTUAL}) and operational characteristic threshold values (OC_{THRESHOLD}). As discussed herein, the calculated operational characteristic values (OC_{CALCULATED}), the actual operational characteristic values (OC_{ACTUAL}) and the operational characteristic threshold values (OC_{THRESHOLD}) may be utilized to detect operational anomalies for the component(s) during operation of power plant system 12, determine operational reliability for the component(s), determine remaining useful life (RUL) for the component(s) and/or adjust or control the operation of power plant system 12.

The calculated operational characteristic values (OC_{CALCULATED}) may represent ideal operational characteristics for the component(s) of power plant system 12. Continuing the example, the calculated operational characteristic values (OC_{CALCULATED}) may represent an ideal bearing temperature for bearing 52 of power plant system 12. The calculated operational characteristic values (OC_{CALCULATED}) may be known, predetermined and/or calculated based on known information and/or standards of bearing 52 and/or power plant system 12. For example, the operational characteristics for bearing 52 may be predetermined and/or calculated based on known, ideal and/or calculated operational attributes and/or material properties of bearing 52 and/or power plant system 12.

The actual operational characteristic values (OC_{ACTUAL}) may represent detected, determined and/or calculated operational characteristics based on real-time, operational information for the component(s) and/or power plant system 12 during operation. Continuing the example, the actual operational characteristic values (OC_{ACTUAL}) may represent a detected bearing temperature for bearing 52 during operation of power plant system 12. In a non-limiting example where power plant system 12 includes computing device(s) 66 and sensor(s) 70 (*see*, FIG. 1), sensor(s) 70 may detect, determine, calculate and/or obtain real-time, operational information relating to the bearing temperature of bearing 52 during operation of power plant system 12.

The operational characteristic threshold values (OC_{THRESHOLD}) may represent operational parameters, ranges and/or upper-limits that may optimize operation of the component(s) and/or power plant system 12 and/or may minimize operational risks (e.g., required maintenance or failure) of the component(s) and/or power plant system 12. In non-limiting examples, the operational characteristic threshold values (OC_{THRESHOLD}) may be predetermined based on operational characteristics (e.g., calculated operational characteristic values (OC_{CALCULATED})), operational attributes and/or material properties of the component(s) and/or power plant system 12. Continuing the example, the operational characteristic threshold values (OC_{THRESHOLD}) may represent a predetermined, upper-limit of the bearing temperature for bearing 52 during operation of power plant system 12. In another non-limiting example, the operational characteristic threshold values (OC_{THRESHOLD}), along with the calculated operational characteristic values (OC_{CALCULATED}), may define an acceptable range or standard deviation of bearing temperatures for bearing 52 during operation of power plant system 12. As shown in FIGs. 3 and 4, operational characteristic threshold values (OC_{THRESHOLD}) may be greater than the calculated operational characteristic values (OC_{CALCULATED}), and may represent an operational characteristics value, for example temperature, that when exceeded may indicated an operational anomaly, as discussed herein.

The plot points and/or determined operational characteristic values for bearing 52 may be analyzed, evaluated and/or compared to determine if an operational anomaly for bearing 52 occurred during operation of power plant system 12. For example, the plot points and/or determined operational characteristic values for bearing 52 may be analyzed, evaluated and/or compared to detect and/or determine if the actual operational characteristic values (OC_{ACTUAL}) exceeds the operational characteristic threshold values (OC_{THRESHOLD}). If it is determined that the actual operational characteristic values (OC_{ACTUAL}) does not exceed the operational characteristic threshold values (OC_{THRESHOLD}), than it may be determined and/or detected that no operational anomaly for bearing 52 occurred during operation of power plant system 12. Conversely, if it is determined that the actual operational characteristic values (OC_{ACTUAL}) does exceed the operational characteristic threshold values (OC_{THRESHOLD}), than it may be determined and/or detected that an operational anomaly for bearing 52 occurred during operation of power plant system 12.

In the non-limiting example shown in FIG. 3, the actual bearing temperature (e.g., actual operational characteristic values (OC_{ACTUAL})) of bearing 52 may not exceed the bearing temperature threshold (e.g., operational characteristic threshold values (OC_{THRESHOLD})) during operation of power plant system 12. As such, no anomaly or anomalies for bearing 52 may be detected during operation of power plant system 12. As discussed herein, where no operational anomaly for bearing 52 is determined and/or detected, a first operational reliability information for bearing 52 and/or first remaining useful life (RUL) for bearing 52 may be determined based on the operational characteristics of bearing 52 and/or power plant system 12.

Conversely in the distinct non-limiting example shown in FIG. 4, the actual bearing temperature (e.g., actual operational characteristic values (OC_{ACTUAL})) of bearing 52 may exceed the bearing temperature threshold (e.g., operational characteristic threshold values (OC_{THRESHOLD})) during operation of power plant system 12. As a result, an anomaly for bearing 52 may be detected during operation of power plant system 12. Additional information may be determined where the anomaly for bearing 52 is detected using the actual bearing temperature and the bearing temperature threshold. For example, the number of anomalies for bearing 52 may be determined, detected and/or calculated by determining the number of times and/or instances where the actual bearing temperature exceeds the bearing temperature threshold during operation of power plant system 12. As shown in FIG. 4, it may be determined that the actual bearing temperature for bearing 52 exceeds the bearing temperature threshold twice during operation of power plant system 12. Additionally, an operational anomaly rate for bearing 52 may be calculated using the actual bearing temperature, the bearing temperature threshold and/or the number of determined operational anomalies for bearing 52. More specifically, and shown in FIG. 4, the calculated operational anomaly rate for bearing 52 may be determined and/or calculated by determining the number of operational anomalies for bearing 52 and determining the change in time (Δ Operational Time) between the determined operational anomalies for bearing 52. As discussed herein, where an operational anomaly for bearing 52 is determined and/or detected, second operational reliability information for bearing 52 and/or second remaining useful life (RUL) for bearing 52 may be determined based on the operational characteristics of bearing 52 and/or power plant system 12, as well as the determined operational anomaly, the number of operational anomalies and/or the calculated operational anomaly rate.

Continuing the example from FIG. 4, FIG. 5 shows a chart including operational reliability information for bearing 52 of power plant system 12. Specifically, FIG. 5 shows a chart including second operational reliability information for bearing 52 after operational anomalies for bearing 52 have been determined during operation of power plant system 12. As discussed herein with respect to process P11 in FIG. 2, the second operational reliability information may include a variety of calculated probabilities relating to required maintenance and/or failure of bearing 52. As shown in the non-limiting example of FIG. 5, the second operational reliability of bearing 52 may include a calculated probability of requiring maintenance on bearing 52 in real-time (e.g., immediately), a calculated probability of failure for bearing 52 in real-time, a calculated probability of requiring maintenance on bearing 52 at predetermined, future times, and/or a calculated probability of failure for bearing 52 at predetermined, future times. In the non-limiting example, the calculated variety of probabilities may be estimates, a single percentage, and/or a percentage range. As discussed herein with respect to process P11 shown in FIG. 2, the second operational reliability information for bearing 52 may be determined based on the ambient condition(s) for power plant system 12 (*see*, process P2; FIG. 2), operational characteristics of bearing 52 and/or power plant system 12, the determined operational anomaly, the number of operational anomalies and/or the calculated operational anomaly rate (*see*, FIG. 4).

Additionally as shown in FIG. 5, the chart may also include various operational reliability thresholds for bearing 52 of power plant system 12. The various operational reliability thresholds for bearing 52 may correspond to the various probabilities of the second operational reliability information, and may include probabilities relating to required maintenance and/or failure of bearing 52 in real-time and/or at predetermined, future times. As discussed herein, the operational reliability thresholds for bearing 52 may be predetermined and/or based on ambient condition(s) and/or operational characteristic(s) that are known, ideal and/or calculated as discussed herein. Additionally, or alternatively, the operational reliability thresholds for bearing 52 may be based on actual and/or real-time ambient condition(s) for power plant system 12 and/or operational characteristic(s) of bearing 52 and/or power plant system 12 that may be detected by sensor(s) 70 (*see*, FIG. 1).

In comparing each probability of the second operational reliability information with a corresponding probability of operational reliability thresholds for bearing 52, it may be determined if operation of power plant system 12 may need to be adjusted. Specifically, the operation of power plant system 12 and/or distinct parts, components or systems (e.g., ST system 18, GT system 30 and so on) may require immediate and/or future adjustment where the second operational reliability information for bearing 52 deviates or varies from the operational reliability thresholds for bearing 52. For example, and as shown in FIG. 5, it may be determined that the probability for immediate or real-time required maintenance (e.g., second operational reliability information) of bearing 52 may exceed the operational reliability thresholds for immediate or real-time required maintenance of bearing 52 (e.g., 3% > 2%). As a result, it may be determined that the operation of power plant system 12 may be adjusted.

In a non-limiting example, because the probability for immediate or real-time required maintenance of bearing 52 exceeds the operational reliability thresholds for immediate or real-time required maintenance of bearing 52, the rotation of shaft 50 of GT system 30 (*see*, FIG. 1) may be slowed, which in turn may reduce power output generated by GT system 30 and/or power plant system 12. This may relieve some of the operational stress on bearing 52, which adjusts the detected operational characteristics (e.g., bearing temperature) for bearing 52 and ultimately may reduce the probability for immediate or real-time required maintenance of bearing 52 as determined in the second operational reliability information below the corresponding operational reliability threshold. This adjustment of power plant system 12 may optimize operation or performance of power plant system 12 by allowing power plant system 12 to continue to generate a load and/or power output. Additionally the adjustment may minimize operational risks (e.g., bearing required maintenance or failure) of power plant system 12 by reducing the operational stress experienced by bearing 52 and reducing the probability for immediate or real-time required maintenance of bearing 52 below the corresponding operational reliability threshold. Adjusting the power plant system 12 to reduce the speed of shaft 50 may further be supported in view of the fact that no other probability of the second operational reliability information exceeds the corresponding probability of the operational reliability thresholds - especially the probabilities relating to failure of the bearing.

In another non-limiting example, the operation of power plant system 12 may be adjusted by shutting down and/or stopping operation of GT system 30 and/or power plant system 12 to perform an unscheduled maintenance procedure on bearing 52. Stopping operation of power plant system 12 minimizes operational risks of power plant system 12 by immediately performing maintenance on bearing 52 before bearing 52 reduces the performance of power plant system 12 and/or causes damage to power plant system 12. Additionally, performing the unscheduled maintenance on bearing 52 may ensure optimized operation or performance of power plant system 12 after bearing 52 is fixed and/or adjusted, and may also extend the operational life of bearing 52, GT system 30 and/or power plant 12.

Continuing the example above, FIG. 6 shows a chart including second remaining useful life (RUL) information for bearing 52 of power plant system 12. Specifically, FIG. 6 shows a chart including RUL information for bearing 52 after operational anomalies for bearing 52 have been determined during operation of power plant system 12, and second operational reliability information for bearing has been calculated. As discussed herein with respect to process P14 in FIG. 2, the second RUL information may be based on, identified and/or provided using the determined second operational reliability (*see*, or the variety of calculated probabilities relating to required maintenance and/or failure of bearing 52 of power plant system 12. In non-limiting examples shown in FIG. 6, the second RUL information may include operational hours for bearing 52 prior to requiring maintenance of bearing 52, a number of start-ups for bearing 52 prior to requiring maintenance of bearing 52, operational hours for bearing 52 prior to the failure of the bearing 52, and/or a number of start-ups for the bearing 52 prior to the failure of the bearing 52. The second RUL information may be estimates, a single number or hour value, and/or a number or hour range. The second RUL information for bearing 52 may be utilized to determine, calculate and/or schedule a future maintenance procedure and/or a replacement procedure for bearing 52 of power plant system 12. The scheduled future maintenance and/or replacement procedures for bearing 52 based on the second RUL information may help to maintain optimized performance of power plant system 12 by performing maintenance and/or replacement procedures for bearing 52 prior to an reduction in performance and/or operational efficiency for bearing 52. Additionally, the scheduled future maintenance and/or replacement procedures for bearing 52 may help to avoid operational (future) risk, such as undesirable damage to the bearing 52 and/or power plant system 12, by performing maintenance and/or replacement procedures for bearing 52 prior to bearing 52 becoming damaged and/or damaging power plant system 12.

Although second operational reliability information and second RUL information are shown and discussed herein with respect to FIGs. 5 and 6, it is understood that charts including first operational reliability information and first RUL may include substantially similar information. That is, and continuing the example from above, first operational reliability information and first RUL for bearing 52 of power plant system 12 may include substantially similar information, probabilities and/or estimates relating to operational life of bearing 52 based only on the ambient condition(s) for power plant system 12 and operational characteristics of bearing 52 (*see*, process P5-P8; FIG. 2).

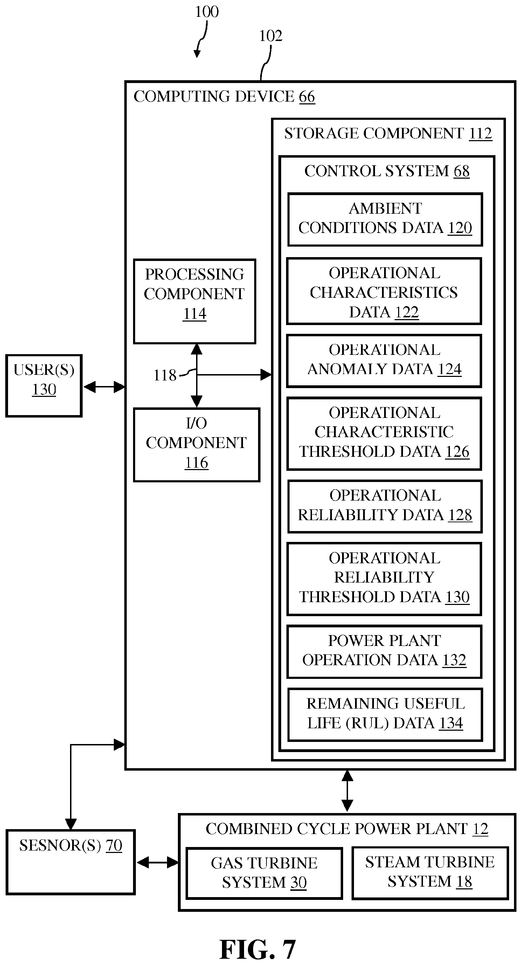

FIG. 7 shows an illustrative environment 100. To this extent, environment 100 includes computer infrastructure 102 that can perform the various process steps described herein for controlling operations of power plant system 12 including ST system 18 and GT system 30. In particular, computer infrastructure 102 is shown including a computing device 66 that comprises control system 68, which enables computing device 66 to control operation of power plant system 12 by performing one or more of the process steps of the disclosure.

Computing device 66 is shown including a storage component 112, a processing component 114, an input/output (I/O) component 116, and a bus 118. Further, computing device 66 is shown in communication with power plant system 12 and/or sensors 70. As is known in the art, in general, processing component 114 executes computer program code, such as control system 68, that is stored in storage component 112 or an external storage component (not shown). While executing computer program code, processing component 114 can read and/or write data, such as control system 68, to/from storage component 112 and/or I/O component 116. Bus 118 provides a communications link between each of the components in computing device 66. I/O component 116 can comprise any device that enables a user 130 to interact with computing device 66 or any device that enables computing device 66 to communicate with one or more other computing devices. Input/output devices (including but not limited to keyboards, displays, pointing devices, etc.) can be coupled to the system either directly or through intervening I/O controllers.

In any event, computing device 66 can comprise any general purpose computing article of manufacture capable of executing computer program code installed by a user 130 (e.g., a personal computer, server, handheld device, etc.). However, it is understood that computing device 66 and control system 68 are only representative of various possible equivalent computing devices that may perform the various process steps of the disclosure. To this extent, in other embodiments, computing device 66 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

Similarly, computer infrastructure 102 is only illustrative of various types of computer infrastructures for implementing the disclosure. For example, in one embodiment, computer infrastructure 102 comprises two or more computing devices (e.g., a server cluster) that communicate over any type of wired and/or wireless communications link, such as a network, a shared memory, or the like, to perform the various process steps of the disclosure. When the communications link comprises a network, the network can comprise any combination of one or more types of networks (e.g., the Internet, a wide area network, a local area network, a virtual private network, etc.). Network adapters may also be coupled to the system to enable the data processing system to become coupled to other data processing systems or remote printers or storage devices through intervening private or public networks. Modems, cable modem and Ethernet cards are just a few of the currently available types of network adapters. Regardless, communications between the computing devices may utilize any combination of various types of transmission techniques.

As previously mentioned and discussed herein, control system 68 enables computing infrastructure 102 to control operation of power plant system 12. To this extent, control system 68 is shown including ambient conditions data 120, operational characteristics data 122, operational anomaly data 124, operational characteristic threshold data 126, operational reliability data 128, operational reliability threshold data 130, power plant operation data 132, and remaining useful life (RUL) data 134. Operation of each of these data is discussed further herein, for example, with respect to processes P1-P14 as shown in FIG. 2. However, it is understood that some of the various data shown in FIG. 7 can be implemented independently, combined, and/or stored in memory for one or more separate computing devices that are included in computer infrastructure 102. Further, it is understood that some of the data and/or functionality may not be implemented, or additional data and/or functionality may be included as part of environment 100.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

As discussed herein, various systems and components are described as "obtaining" data (e.g., obtaining ambient condition(s) data for power plant system 12, obtaining operational characteristics data for component(s) of power plant system 12, etc.). It is understood that the corresponding data can be obtained using any solution. For example, the corresponding system/component can generate and/or be used to generate the data, retrieve the data from one or more data stores (e.g., a database), receive the data from another system/component, and/or the like. When the data is not generated by the particular system/component, it is understood that another system/component can be implemented apart from the system/component shown, which generates the data and provides it to the system/component and/or stores the data for access by the system/component.

As will be appreciated by one skilled in the art, the present disclosure may be embodied as a system, method or computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The present disclosure is described herein with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" as applied to a particular value of a range applies to both values, and unless otherwise dependent on the precision of the instrument measuring the value, may indicate +/- 10% of the stated value(s).

The corresponding structures, materials, acts, and equivalents of all means or step plus function elements in the claims herein are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Various aspects and embodiments of the present invention are defined by the following clauses:
1. A system, comprising:
   a power plant system including a component; and
   at least one computing device in communication with the power plant system, the at least one computing device configured to control the power plant system by performing processes including:
      determining if an operational anomaly for the component occurred during operation of the power plant system;
      in response to determining the operational anomaly did not occur:
         determining a first operational reliability of the component based on operational characteristics of at least one of the component, or the power plant system;
      in response to determining the operational anomaly occurred:
         determining a second operational reliability of the component based on the determined operational anomaly, and the operational characteristics of at least one of the component, or the power plant system; and
         adjusting operation of the power plant system in response to one of the first operational reliability or the second operational reliability exceeding a predetermined operational reliability threshold.
2. The system of clause 1, wherein the at least one computing device is configured to determine if the operational anomaly for the component occurred during operation of the power plant system by performing processes including:
   determining the operational characteristics of the component;
   comparing the determined operational characteristics of the component with operational characteristics thresholds for the component; and
   detecting when the determined operational characteristics of the component vary from the operational characteristics thresholds for the component to determine the operational anomaly for the component occurred during operation of the power plant system.
3. The system of clause 1, wherein in response to determining the operational anomaly occurred, the processes performed by the at least one computing device to control the power plant system further include:
   determining a number of operational anomalies for the component that occurred during operation of the power plant system; and
   calculating an operational anomaly rate for the component during operation of the power plant system.
4. The system of clause 1, wherein the at least one computing device is configured to determine the first operational reliability by performing processes including:
   calculating at least one of:
   a probability of requiring maintenance on the component in real-time,
   a probability of failure for the component in real-time,
   a probability of requiring maintenance on the component at a predetermined, future time, or
   a probability of failure for the component at the predetermined future time.
5. The system of clause 4, wherein the processes performed by the at least one computing device to control the power plant system further include:
   providing first remaining useful life (RUL) information for the component based on the first operational reliability, the first RUL information including at least one of:
   operational hours for the component prior to requiring maintenance of the component,
   a number of start-ups for the component prior to requiring maintenance of the component,
   operational hours for the component prior to the failure of the component, or
   a number of start-ups for the component prior to the failure of the component.
6. The system of clause 1, wherein the at least one computing device is configured to determine the second operational reliability by performing processes including:
   calculating at least one of:
   a probability of requiring maintenance on the component in real-time,
   a probability of failure for the component in real-time,
   a probability of requiring maintenance on the component at a predetermined, future time, or
   a probability of failure for the component at the predetermined future time.
7. The system of clause 6, wherein the processes performed by the at least one computing device to control the power plant system further include:
   providing second remaining useful life (RUL) information for the component based on the second operational reliability, the second RUL information including at least one of:
   operational hours for the component prior to requiring maintenance of the component,
   a number of start-ups for the component prior to requiring maintenance of the component,
   operational hours for the component prior to the failure of the component, or
   a number of start-ups for the component prior to the failure of the component.
8. The system of clause 1, wherein the at least one computing device is configured to adjust the operation of the power plant system by performing processes including one of:
   reducing a power output generated by the power plant system, or
   stopping operation of the power plant system.
9. The system of clause 1, wherein the processes performed by the at least one computing device to control the power plant system further include:
   determining ambient conditions for the power plant system including the component,
   wherein the determined first operational reliability of the component is based on the ambient conditions for the power plant system, and
   wherein the determined second operational reliability of the component is based on the ambient conditions for the power plant system.
10. A computer program product comprising program code, which when executed by at least one computing device, causes the at least one computing device to control a power plant system including a component, by performing processes including:
   determining if an operational anomaly for the component occurred during operation of the power plant system;
   in response to determining the operational anomaly did not occur:
      determining a first operational reliability of the component based on operational characteristics of at least one of the component, or the power plant system;
   in response to determining the operational anomaly occurred:
      determining a second operational reliability of the component based on the determined operational anomaly, and the operational characteristics of at least one of the component, or the power plant system; and
   adjusting operation of the power plant system in response to one of the first operational reliability or the second operational reliability exceeding a predetermined operational reliability threshold.
11. The computer program product of clause 10, wherein the determining if the operational anomaly for the component occurred during operation of the power plant system includes:
   determining the operational characteristics of the component;
   comparing the determined operational characteristics of the component with operational characteristics thresholds for the component; and
   detecting when the determined operational characteristics of the component vary from the operational characteristics thresholds for the component to determine the operational anomaly for the component occurred during operation of the power plant system.
12. The computer program product of clause 10, wherein in response to determining the operational anomaly occurred, the program code causes the at least one computing device to control the power plant system including the component, by performing processes including:
   determining a number of operational anomalies for the component that occurred during operation of the power plant system; and
   calculating an operational anomaly rate for the component during operation of the power plant system.
13. The computer program product of clause 10, wherein the determining of the first operational reliability of the component includes:
   calculating at least one of:
   a probability of requiring maintenance on the component in real-time,
   a probability of failure for the component in real-time,
   a probability of requiring maintenance on the component at a predetermined, future time, or
   a probability of failure for the component at the predetermined future time.
14. The computer program product of clause 13, wherein the program code causes the at least one computing device to control the power plant system including the component, by performing processes including:
   providing first remaining useful life (RUL) information for the component based on the first operational reliability, the first RUL information including at least one of:
   operational hours for the component prior to requiring maintenance of the component,
   a number of start-ups for the component prior to requiring maintenance of the component,
   operational hours for the component prior to the failure of the component, or
   a number of start-ups for the component prior to the failure of the component.
15. The computer program product of clause 10, wherein the determining of the second operational reliability of the component includes at least one of:
   calculating at least one of:
   a probability of requiring maintenance on the component in real-time,
   a probability of failure for the component in real-time,
   a probability of requiring maintenance on the component at a predetermined, future time, or
   a probability of failure for the component at the predetermined future time.
16. The computer program product of clause 15, wherein the program code causes the at least one computing device to control the power plant system including the component, by performing processes including:
   providing second remaining useful life (RUL) information for the component based on the second operational reliability, the second RUL information including at least one of:
   operational hours for the component prior to requiring maintenance of the component,
   a number of start-ups for the component prior to requiring maintenance of the component,
   operational hours for the component prior to the failure of the component, or
   a number of start-ups for the component prior to the failure of the component.
17. The computer program product of clause 10, wherein the adjusting of the operation of the power plant system includes one of:
   reducing a power output generated by the power plant system, or
   stopping operation of the power plant system.
18. A method for controlling a power plant system including a component, the method comprising:
   determining if an operational anomaly for the component occurred during operation of the power plant system;
   in response to determining the operational anomaly did not occur:
      determining a first operational reliability of the component based on operational characteristics of at least one of the component, or the power plant system;
   in response to determining the operational anomaly occurred:
      determining a second operational reliability of the component based on the determined operational anomaly, and the operational characteristics of at least one of the component, or the power plant system; and
   adjusting operation of the power plant system in response to one of the first operational reliability or the second operational reliability exceeding a predetermined operational reliability threshold.
19. The method of clause 18, wherein determining if the operational anomaly for the component occurred during operation of the power plant system includes:
   determining the operational characteristics of the component;
   comparing the determined operational characteristics of the component with operational characteristics thresholds for the component;
   detecting when the determined operational characteristics of the component vary from the operational characteristics thresholds for the component to determine the operational anomaly for the component occurred during operation of the power plant system;
   determining a number of operational anomalies for the component that occurred during operation of the power plant system; and
   calculating an operational anomaly rate for the component during operation of the power plant system.
20. The method of clause 18, further comprising:
   determining ambient conditions for the power plant system including the component,
   wherein the determined first operational reliability of the component is based on the ambient conditions for the power plant system, and
   wherein the determined second operational reliability of the component is based on the ambient conditions for the power plant system.

## Claims

1. A system (10), comprising:
a power plant system (12) including a component (36); and
at least one computing device (66) in communication with the power plant system (12), the at least one computing device (66) configured to control the power plant system (12) by performing processes including:
determining if an operational anomaly (124) for the component (36) occurred during operation of the power plant system (12);
in response to determining the operational anomaly (124) did not occur:
determining a first operational reliability (128) of the component (36) based on operational characteristics (122) of at least one of the component (36), or the power plant system (12);
in response to determining the operational anomaly (124) occurred:
determining a second operational reliability (128) of the component (36) based on the determined operational anomaly (124), and the operational characteristics (122) of at least one of the component (36), or the power plant system (12); and
adjusting operation of the power plant system (12) in response to one of the first operational reliability (128) or the second operational reliability (128) exceeding a predetermined operational reliability threshold.

2. The system (10) of claim 1, wherein the at least one computing device (66) is configured to determine if the operational anomaly (124) for the component (36) occurred during operation of the power plant system (12) by performing processes including:
determining the operational characteristics (122) of the component (36);
comparing the determined operational characteristics (122) of the component (36) with operational characteristics thresholds (126) for the component (36); and
detecting when the determined operational characteristics (122) of the component (36) vary from the operational characteristics thresholds (126) for the component (36) to determine the operational anomaly (124) for the component (36) occurred during operation of the power plant system (12).

3. The system (10) of claim 1, wherein in response to determining the operational anomaly (124) occurred, the processes performed by the at least one computing device (66) to control the power plant system (12) further include:
determining a number of operational anomalies (124) for the component (36) that occurred during operation of the power plant system (12); and
calculating an operational anomaly (124) rate for the component (36) during operation of the power plant system (12).

4. The system (10) of claim 1, wherein the at least one computing device (66) is configured to determine the first operational reliability (128) by performing processes including:
calculating at least one of:
a probability of requiring maintenance on the component (36) in real-time,
a probability of failure for the component (36) in real-time,
a probability of requiring maintenance on the component (36) at a predetermined, future time, or
a probability of failure for the component (36) at the predetermined future time.

5. The system (10) of claim 4, wherein the processes performed by the at least one computing device (66) to control the power plant system (12) further include:
providing first remaining useful life (RUL) information (134) for the component (36) based on the first operational reliability (128), the first RUL information (134) including at least one of:
operational hours for the component (36) prior to requiring maintenance of the component (36),
a number of start-ups for the component (36) prior to requiring maintenance of the component (36),
operational hours for the component (36) prior to the failure of the component (36), or
a number of start-ups for the component (36) prior to the failure of the component (36).

6. The system (10) of claim 1, wherein the at least one computing device (66) is configured to determine the second operational reliability (128) by performing processes including:
calculating at least one of:
a probability of requiring maintenance on the component (36) in real-time,
a probability of failure for the component (36) in real-time,
a probability of requiring maintenance on the component (36) at a predetermined, future time, or
a probability of failure for the component (36) at the predetermined future time.

7. The system (10) of claim 6, wherein the processes performed by the at least one computing device (66) to control the power plant system (12) further include:
providing second remaining useful life (RUL) information (134) for the component (36) based on the second operational reliability (128), the second RUL information (134) including at least one of:
operational hours for the component (36) prior to requiring maintenance of the component (36),
a number of start-ups for the component (36) prior to requiring maintenance of the component (36),
operational hours for the component (36) prior to the failure of the component (36), or
a number of start-ups for the component (36) prior to the failure of the component (36).

8. The system (10) of claim 1, wherein the at least one computing device (66) is configured to adjust the operation of the power plant system (12) by performing processes including one of:
reducing a power output generated by the power plant system (12), or
stopping operation of the power plant system (12).

9. The system (10) of claim 1, wherein the processes performed by the at least one computing device (66) to control the power plant system (12) further include:
determining ambient conditions (120) for the power plant system (12) including the component (36),
wherein the determined first operational reliability (128) of the component (36) is based on the ambient conditions (120) for the power plant system (12), and
wherein the determined second operational reliability (128) of the component (36) is based on the ambient conditions (120) for the power plant system (12).

10. A method for controlling a power plant system (12) including a component (36), the method comprising:
determining if an operational anomaly (124) for the component (36) occurred during operation of the power plant system (12);
in response to determining the operational anomaly (124) did not occur:
determining a first operational reliability (128) of the component (36) based on operational characteristics (122) of at least one of the component (36), or the power plant system (12);
in response to determining the operational anomaly (124) occurred:
determining a second operational reliability (128) of the component (36) based on the determined operational anomaly (124), and the operational characteristics (122) of at least one of the component (36), or the power plant system (12); and
adjusting operation of the power plant system (12) in response to one of the first operational reliability (128) or the second operational reliability (128) exceeding a predetermined operational reliability threshold.

11. The method of claim 10, wherein determining if the operational anomaly (124) for the component (36) occurred during operation of the power plant system (12) includes:
determining the operational characteristics (122) of the component (36);
comparing the determined operational characteristics (122) of the component (36) with operational characteristics thresholds (126) for the component (36);
detecting when the determined operational characteristics (122) of the component (36) vary from the operational characteristics thresholds (126) for the component (36) to determine the operational anomaly (124) for the component (36) occurred during operation of the power plant system (12);
determining a number of operational anomalies for the component (36) that occurred during operation of the power plant system (12); and
calculating an operational anomaly (124) rate for the component (36) during operation of the power plant system (12).

12. The method of claim 10, further comprising:
determining ambient conditions (120) for the power plant system (12) including the component (36),
wherein the determined first operational reliability (128) of the component (36) is based on the ambient conditions (120) for the power plant system (12), and
wherein the determined second operational reliability (128) of the component (36) is based on the ambient conditions (120) for the power plant system (12).

13. The method of claim 10, wherein determining the second operational reliability (128) includes:
calculating at least one of:
a probability of requiring maintenance on the component (36) in real-time,
a probability of failure for the component (36) in real-time,
a probability of requiring maintenance on the component (36) at a predetermined, future time, or
a probability of failure for the component (36) at the predetermined future time.

14. The method of claim 13, further comprising:
providing second remaining useful life (RUL) information (134) for the component (36) based on the second operational reliability (128), the second RUL information (134) including at least one of:
operational hours for the component (36) prior to requiring maintenance of the component (36),
a number of start-ups for the component (36) prior to requiring maintenance of the component (36),
operational hours for the component (36) prior to the failure of the component (36), or
a number of start-ups for the component (36) prior to the failure of the component (36).

15. The method of claim 10, wherein adjusting the operation of the power plant system (12) includes one of:
reducing a power output generated by the power plant system (12), or
stopping operation of the power plant system (12).
